# EUROPÄISCHE PATENTSCHRIFT

(11) **EP 3 383 703 B1**
(45) Veröffentlichungstag und Bekanntmachung des Hinweises auf die Patenterteilung: **13.11.2019**
(21) Anmeldenummer: 16816577.7
(22) Anmeldetag: 25.11.2016
(51) Int. Cl.: B60R 1/00, B60W 50/14, B60W 40/04

(54) **STEUERGERÄT UND VERFAHREN FÜR EIN FAHRERASSISTENZSYSTEM EINES FAHRZEUGS**
CONTROL DEVICE AND METHOD FOR A DRIVER ASSISTANCE SYSTEM IN A VEHICLE
APPAREIL DE COMMANDE ET PROCÉDÉ POUR UN SYSTÈME D'AIDE À LA CONDUITE D'UN VÉHICULE

(30) Priorität: 02.12.2015 DE 102015015437
(43) Veröffentlichungstag der Anmeldung: 10.10.2018
(73) Patentinhaber: Conti Temic microelectronic GmbH, 90411 Nürnberg (DE)
(72) Erfinder: FEY, Wolfgang, 88131 Bodolz (DE); KÜHNKE, Lutz, 60486 Frankfurt am Main (DE)
(86) Internationale Anmeldenummer: PCT/DE2016/200545
(87) Internationale Veröffentlichungsnummer: WO 2017/092750

(56) Entgegenhaltungen:
- WO-A1-2016/071412
- DE-A1- 10 345 013
- DE-A1-102010 051 205
- DE-T5-112013 000 873
- US-A1- 2008 122 597

## Beschreibung

Die Erfindung betrifft ein Steuergerät sowie ein Betriebsverfahren für ein Fahrerassistenzsystem eines Fahrzeugs, bei dem zur Umsetzung von Fahrerassistenzfunktionen Bilddaten mehrere Fahrzeugkameras verarbeitet werden, insbesondere Bilddaten einer ersten und einer zweiten Fahrzeugkamera.

Fahrerassistenzsysteme für Fahrzeuge sind aus dem Stand der Technik grundsätzliche bekannt. Insbesondere sind Systeme bekannt, bei denen mittels einer oder mehrerer am Fahrzeug angeordneter Fahrzeugkameras Bilddaten aus der Fahrzeugumgebung erfasst, die erfassten Bilddaten mittels eines Steuergeräts verarbeitet und in Abhängigkeit der Bildverarbeitung unterschiedliche Fahrerassistenzfunktionen umgesetzt werden.

Beispielsweise ist es bekannt, mittels einer Frontkamera, d.h. einer vorzugsweise im Fahrzeuginnenraum hinter Fahrzeugscheibe angeordneten und in Richtung der dem Fahrzeug vorausliegenden Fahrzeugumgebung ausgerichteten Fahrzeugkamera, Bilddaten aus der vorausliegenden Fahrzeugumgebung zu erfassen, die Bilddaten zu verarbeiten und Fahrerassistenzfunktionen wie beispielsweise Fahrspurassistent, Verkehrszeichenerkennung, Lichtsteuerung und Objekt- bzw. Hinderniserkennung umzusetzen.

Ebenfalls ist es bekannt, mittels einer Rückfahrkamera, d.h. einer beispielsweise am Fahrzeugheck angeordnete Fahrzeugkamera, Bilddaten aus dem rückwärtigen Bereich hinter dem Fahrzeug zu erfassen, die Bilddaten zu verarbeiten und Fahrerassistenzfunktionen zur Unterstützung des Fahrzeugführers beim Rückwärtsfahren umzusetzen, beispielsweise eine Anzeige der rückwärtigen Fahrzeugumgebung, der Fahrzeugtrajektorie in Abhängigkeit vom Lenkradeinschlag oder des Abstands zu Hindernissen.

In der DE 10 2010 051 205 A1 wird ein Verfahren zum Anzeigen von Bildern auf einer Anzeigeeinrichtung beschrieben, bei welchem zumindest eine Kamera Bilddaten über eine Umgebung des Kraftfahrzeugs erfasst und die Anzeigeeinrichtung in zumindest zwei Betriebsmodi betrieben wird, die sich in einer Ansicht der Umgebung auf der Anzeigeeinrichtung voneinander unterscheiden.

Die US 2008/0122597 A1 beschreibt ein an einem Fahrzeug angeordnetes Kamerasystem mit einer Mehrzahl an Kameras und einer Mehrzahl an Anzeigevorrichtungen, wobei die Anzeigeeinrichtung das Sichtfeld unterschiedlicher Kameras anzeigen kann.

Die DE 103 45 013 beschreibt eine Vorrichtung zur Realisierung von mindestens zwei Fahrerassistenz-Funktionen, umfassend mindestens eine Recheneinheit, wobei durch die Recheneinheit notwendige Berechnungen für mindestens zwei Fahrerassistenz -Funktionen durchführbar sind, wobei die Zuteilung der Rechenkapazität seriell mittels eines Multiplexverfahrens durchführbar ist.

Bekanntermaßen werden sogenannte Signalprozessoren, insbesondere sogenannte digitale Signalprozessoren (DSP), zur Umsetzung bzw. Ausführung der Fahrerassistenzfunktionen erforderliche Bildverarbeitung und Programmcodes eingesetzt. Die von einer Fahrzeugkamera erfassten Bilddaten können dabei mit dem digitalen Signalprozessor unter Verwendung geeigneter Programmcodes, die beispielweise in einem - zusammen mit dem Signalprozessor sowie weiteren Komponenten - in einem Steuergerät angeordneten Speicher hinterlegt sind, verarbeitet werden, und abhängig von dem Ergebnis dieser Verarbeitung kann das Fahrerassistenzsystem - zum Beispiel mit Hilfe eines ebenfalls im Steuergerät angeordneten Mikrocontrollers - unterschiedlichste Komponenten des Fahrzeugs elektronisch betätigen.

Wird nur ein zentrales Steuergerät für die Umsetzung von unterschiedlichen Fahrerassistenzfunktionen von mehreren Fahrzeugkameras verwendet, werden bislang entsprechend mehrere Signalprozessoren in dem zentralen Steuergerät angeordnet. Jeder Signalprozessor dient dabei der Verarbeitung der Videosignale einer der Fahrzeugkameras.

Der vorliegenden Erfindung liegt im Wesentlichen die Aufgabe zugrunde, Kosten und Baugröße bei Steuergeräte bzw. Fahrerassistenzsystemen einzusparen, bei denen Bilddaten mehrerer Fahrzeugkameras zur Umsetzung von unterschiedlichen Fahrerassistenzfunktionen verarbeitet werden.

Ein wesentlicher Gedanke der Erfindung ist es, bei einem Steuergerät (ECU) eines Fahrerassistenzsystems einen Signalprozessor (DSP) derart auszubilden, insbesondere mittels eines entsprechenden Programmcode bzw. Steuerungsalgorithmus, dass dieser zur Verarbeitung von Bilddaten mehrerer Fahrzeugkameras dient und selektiv nur die Bilddaten einer der mehreren Fahrzeugkameras verarbeitet.

Das erfindungsgemäße Steuergerät (ECU) gemäß Anspruch 1 für ein Fahrerassistenzsystem eines Fahrzeugs umfasst einen Signalprozessor, insbesondere nur einen Signalprozessor (DSP), der zur Verarbeitung von Bilddaten mehrerer Fahrzeugkameras dient, insbesondere einer ersten und einer zweiten Fahrzeugkamera (K1, K2), wobei der Signalprozessor derart ausgebildet ist, dass dieser in Abhängigkeit eines aktuellen Betriebszustands des Fahrzeugs selektiv die Bilddaten von nur einer der mehreren Fahrzeugkameras verarbeitet, insbesondere entweder nur die Bilddaten der ersten Fahrzeugkamera (K1) oder nur der zweiten Fahrzeugkamera (K2).

Die Erfindung betrifft weiterhin ein Verfahren gemäß Anspruch 4 zum Betrieb eines Fahrerassistenzsystems eines Fahrzeugs, bei dem mittels eines Steuergeräts (ECU) des Fahrerassistenzsystems Bilddaten mehrere Fahrzeugkameras verarbeitet werden, insbesondere Bilddaten einer ersten und einer zweiten Fahrzeugkamera (K1, K2) , wobei mittels eines Signalprozessors des Steuergeräts (ECU) in Abhängigkeit eines aktuellen Betriebszustands des Fahrzeugs jeweils nur die Bilddaten von einer der mehreren Fahrzeugkameras (K1, K2) verarbeitet werden.

Gemäß einer bevorzugten Ausgestaltung der Erfindung handelt es sich bei einer ersten der mehreren Fahrzeugkameras um eine Frontkamera (K1) und bei einer zweiten der mehreren Fahrzeugkameras um eine Rückfahrkamera (K2). Bei dem Betriebszustand des Fahrzeugs, in Abhängigkeit dessen der Signalprozessor erfindungsgemäß entweder die Bilddaten der Front- oder Rückfahrkamera verarbeitet, handelt es sich vorzugsweise um eine Information, ob das Fahrzeug vorwärts oder rückwärts fährt. Diese Information kann der Signalprozessor beispielsweise über eine Verbindung mit dem Bus (BUS) des Fahrzeugs erhalten sowie beispielsweise in Abhängigkeit davon, welcher Getriebegang aktuell eingelegt ist. Erhält der Signalprozessor in diesem Beispiel die Information, dass das Fahrzeug vorwärts fährt, verarbeitet der Signalprozessor bevorzugt ausschließlich die Bilddaten der Frontkamera (K1) und insbesondere nur Programmcodes zur Umsetzung von Fahrerassistenzfunktionen, welche der Frontkamera (K1) zugeordnet sind. Im umgekehrten Fall, d.h. wenn der Signalprozessor (DSP) die Information erhält, dass das Fahrzeug rückwärtsfährt, verarbeitet der Signalprozessor vorzugsweise ausschließlich die Bilddaten der Rückfahrkamera (K2) und insbesondere nur Programmcodes zur Umsetzung von Fahrerassistenzfunktionen, welche der Rückfahrkamera (K2) zugeordnet sind.

Gemäß einer weiteren bevorzugten Ausgestaltung der Erfindung handelt es sich bei einer der mehreren Fahrzeugkameras um ein Kamerasystem des Fahrzeugs, welches mehrere einzelne Fahrzeugkameras umfasst. Bei einem solchen Kamerasystem kann es sich beispielsweise um ein sogenanntes Surround View Kamerasystem handeln. Surround View Kamerasysteme sind aus dem Stand der Technik grundsätzlich bekannt. Bei derartigen Systemen werden mittels mehrerer - in der Regel mindestens vier - am Fahrzeug angeordneter Kameras Bilddaten aus unterschiedlichen Bereichen der Fahrzeugumgebung erfasst und zu einem Gesamtbild, insbesondere zu einer sogenannten Rundumsicht- oder Draufsicht-Darstellung (Topview, Birds-eye-view) auf die Fahrzeugumgebung, zusammengesetzt. Dieses Gesamtbild kann dem Fahrzeugführer beispielweise bei Rangiermanövern unterstützend auf einem Bildschirm angezeigt werden. Bei dieser Ausgestaltung verarbeitet der Signalprozessor in Abhängigkeit des aktuellen Betriebszustands des Fahrzeugs entweder nur die Bilddaten und insbesondere nur Programmcodes zur Umsetzung von Fahrerassistenzfunktionen, welche dem Kamerasystem zugeordnet sind, beispielsweise einem Surround View Kamerasystem sowie beispielsweise bei Rückwärtsfahrt oder langsamer Vorwärtsfahrt (z.B. unterhalb 40, 50 oder 60 km/h), oder nur die Bilddaten und Programmcodes einer anderen Fahrzeugkamera bzw. eines anderen Kamerasystems.

Die Erfindung betrifft weiterhin ein Fahrerassistenzsystem, das ein erfindungsgemäßes Steuergerät (ECU) umfasst und/oder gemäß dem erfindungsgemäßen Verfahren betrieben wird.

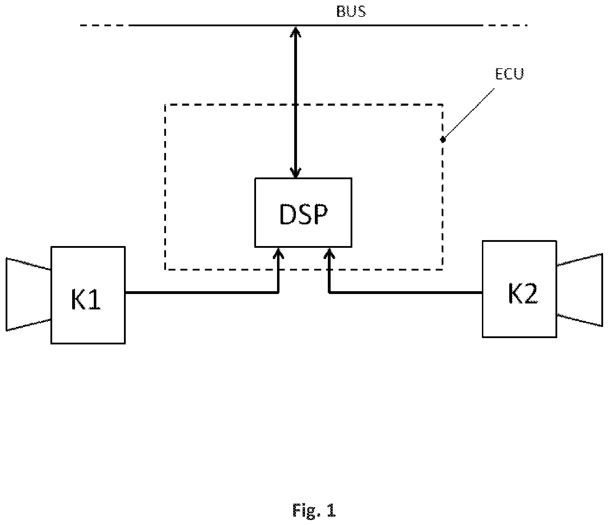

Die Erfindung wird nachfolgend anhand dem in Fig. 1 dargestellten Ausführungsbeispiel näher erläutert.

Gemäß dem Ausführungsbeispiel in Fig. 1 umfasst das erfindungsgemäße Steuergerät (ECU) einen Signalprozessor (DSP). Bei dem Signalprozessor (DSP) handelt es sich vorzugsweise um einen digitalen Signalprozessor (DSP), der bei analogen Bilddaten beispielsweise in Verbindung Analog-Digital-Wandlern eingesetzt werden kann. Das Steuergerät (ECU) kann auch noch weitere Komponenten umfassen, insbesondere Speichereinrichtungen, in denen die vom Signalprozessor (DSP) ausgeführten Programmcodes für die jeweiligen Fahrerassistenzfunktionen gespeichert sind, sowie einen Mikrocontroller und weitere für die Umsetzung der Fahrerassistenzfunktionen erforderliche Komponenten.

Gemäß dem Ausführungsbeispiel aus Fig. 1 empfängt der Signalprozessor (DSP) Bilddaten von zwei Kameras (K1, K2). Das Steuergerät (ECU) ist hierzu vorzugweise mit wenigstens zwei Eingängen für die Videosignale der Kameras (K1, K2) ausgebildet, beispielsweise zwei LVDS Video-Eingänge. Insbesondere wenn es sich bei einer der Kameras (K1, K2) um ein Kamerasystem handelt, welches mehrere einzelne Kameras umfasst, kann das Steuergerät (ECU) mit entsprechend mehreren Video-Eingängen ausgebildet sein, wobei bei Vorliegen eines dem Kamerasystem zugeordneten Betriebszustandes nur die Bilddaten, der Kameras verarbeitet werden, die dem Kamerasystem zugeordnet sind.

Im vorliegenden Ausführungsbeispiel empfängt der Signalprozessor (DSP) weiterhin Informationen über den aktuellen Betriebszustand des Fahrzeugs über den Bus (BUS) des Fahrzeugs, zum Beispiel über einen CAN-Bus, LINK-Bus und/oder einen Flexray-Bus des Fahrzeugs.

## Patentansprüche

1. Steuergerät (ECU) für ein Fahrerassistenzsystem eines Fahrzeugs, umfassend einen Signalprozessor (DSP), der zur Verarbeitung von Bilddaten von mehreren Fahrzeugkameras dient, insbesondere einer ersten und einer zweiten Fahrzeugkamera (K1, K2), **dadurch gekennzeichnet,**
**dass** der Signalprozessor (DSP) derart ausgebildet ist, dass dieser in Abhängigkeit eines aktuellen Betriebszustands des Fahrzeugs die Bilddaten nur einer der mehreren Fahrzeugkameras verarbeitet.

2. Steuergerät gemäß Anspruch 1, **dadurch gekennzeichnet, dass** es sich bei einer der mehreren Fahrzeugkameras um ein Kamerasystem handelt.

3. Steuergerät gemäß Anspruch 2, **dadurch gekennzeichnet, dass** es sich bei einer der mehreren Fahrzeugkameras um ein Surround View Kamerasystem handelt.

4. Verfahren zum Betrieb eines Fahrerassistenzsystems eines Fahrzeugs, bei dem mittels eines Steuergeräts (ECU) des Fahrerassistenzsystems Bilddaten mehrere Fahrzeugkameras verarbeitet werden, **dadurch gekennzeichnet,**
**dass** mittels eines Signalprozessors (DSP) des Steuergeräts in Abhängigkeit eines aktuellen Betriebszustands des Fahrzeugs die Bilddaten nur einer der mehreren Fahrzeugkameras verarbeitet werden).

5. Verfahren gemäß Anspruch 4, **dadurch gekennzeichnet, dass** es sich bei einer der mehreren Fahrzeugkameras um ein Kamerasystem handelt.

6. Verfahren gemäß Anspruch 5, **dadurch gekennzeichnet, dass** es sich bei dem Kamerasystem um ein Surround View Kamerasystem handelt.

7. Fahrerassistenzsystem, das ein Steuergerät (ECU) nach Anspruch 1, 2 oder 3 umfasst und/oder gemäß dem Verfahren nach Anspruch 4, 5 oder 6 betrieben wird.

## Claims

1. Control unit (ECU) for a driver assistance system of a vehicle, comprising a signal processor (DSP), which serves to process image data of a plurality of vehicle cameras, in particular of a first and a second vehicle camera (K1, K2), **characterized in that**
the signal processor (DSP) is configured in such a way that it processes the image data of only one of the plurality of vehicle cameras depending on a current operating state of the vehicle.

2. Control unit according to Claim 1, **characterized in that** one of the plurality of vehicle cameras is a camera system.

3. Control unit according to Claim 2, **characterized in that** one of the plurality of vehicle cameras is a surround view camera system.

4. Method for operating a driver assistance system of a vehicle, in which image data of a plurality of vehicle cameras are processed by means of a control unit (ECU) of the driver assistance system, **characterized in that**
the image data of only one of the plurality of vehicle cameras are processed by means of a signal processor (DSP) of the control unit depending on a current operating state of the vehicle.

5. Method according to Claim 4, **characterized in that** one of the plurality of vehicle cameras is a camera system.

6. Method according to Claim 5, **characterized in that** the camera system is a surround view camera system.

7. Driver assistance system, which comprises a control unit (ECU) according to Claim 1, 2 or 3 and/or is operated in accordance with the method according to Claim 4, 5 or 6.

## Revendications

1. Unité de commande (ECU) destinée à un système d'aide à la conduite d'un véhicule, comprenant un processeur de signaux (DSP) qui sert à traiter des données d'image provenant d'une pluralité de caméras de véhicule, notamment d'une première et d'une seconde caméra de véhicule (K1, K2), **caractérisée en ce que**
le processeur de signaux (DSP) est conçu pour traiter les données d'image d'une seule de la pluralité de caméras de véhicule en fonction d'un état de fonctionnement actuel du véhicule.

2. Unité de commande selon la revendication 1, **caractérisée en ce que** l'une de la pluralité de caméras de véhicule est un système de caméra.

3. Unité de commande selon la revendication 2, **caractérisée en ce que** l'une de la pluralité de caméras de véhicule est un système de caméra à vision surround.

4. Procédé pour le fonctionnement d'un système d'aide à la conduite d'un véhicule, dans lequel des données d'image d'une pluralité de caméras de véhicule sont traitées au moyen d'une unité de commande (ECU) du système d'aide à la conduite, **caractérisé en ce que** les données d'image d'une seule de la pluralité de caméras de véhicule sont traitées au moyen d'un processeur de signaux (DSP) de l'unité de commande en fonction d'un état de fonctionnement actuel du véhicule.

5. Procédé selon la revendication 4, **caractérisé en ce que** l'une de la pluralité de caméras de véhicule est un système de caméra.

6. Procédé selon la revendication 5, **caractérisé en ce que** le système de caméra est un système de caméra à vision surround.

7. Système d'aide à la conduite comprenant une unité de commande (ECU) selon la revendication 1, 2 ou 3 et/ou fonctionnant conformément au procédé selon la revendication 4, 5 ou 6.
